# EUROPÄISCHE PATENTSCHRIFT

(11) **EP 0 529 149 B1**
(45) Veröffentlichungstag und Bekanntmachung des Hinweises auf die Patenterteilung: **07.12.1994**
(21) Anmeldenummer: 91120882.5
(22) Anmeldetag: 05.12.1991
(51) Int. Cl.: C02F 1/24, B03D 1/14

(54) **Flotationsanlage mit senkrechten Lamellen**
Flotation plant with vertical lamellae
Installation de flotation aux lamelles verticales

(30) Priorität: 29.08.1991 DE 4128665
(43) Veröffentlichungstag der Anmeldung: 03.03.1993
(73) Patentinhaber: ECOTECHNIEK BV, NL-3606 AZ Maarsen (NL)
(72) Erfinder: Pos, Jacobus, NL-7141 VE Groenlo (NL)
(74) Vertreter: Habbel, Hans-Georg

(56) Entgegenhaltungen:
- DE-A- 3 231 844
- US-A- 4 277 347

## Beschreibung

Die Erfindung bezieht sich auf eine Flotationsanlage nach dem Oberbegriff des Patentanspruches.

Derartige Flotationsanlagen sind auf dem Gebiet der Wasseraufbereitung, beispielsweise aus DE-A-3 231 844, bekannt. Der Flüssigkeitsstrom wird entweder senkrecht zu den Lamellenflächen geführt oder in Richtung der Lamellenflächen, so daß das Wasser zwischen den Lamellen hergeführt wird.

Der Erfindung liegt die Aufgabe zugrunde, eine gattungsgemäße Flotationsanlage dahingehend zu verbessern, daß ein hoher Abscheidegrad bei Wässern mit einer hohen Schmutzlast erzielbar ist.

Diese der Erfindung zugrundeliegende Aufgabe wird durch die Ausbildung einer gattungsgemäßen Flotationsanlage nach dem kennzeichnenden Merkmal des Patentanspruches gelöst.

Die Erfindung schlägt mit anderen Worten vor, bei den üblicherweise verwendeten Paketen von mehreren Lamellen die Lamellen nicht schräg, sondern senkrecht anzuordnen. Bei den wellig ausgebildeten Lamellen bewirkt der Versatz der einzelnen Lamellenflächen zueinander, daß die in den Lamellen vorhandenen Rinnen nicht miteinander fluchten, so daß sich kein gleichmäßig breiter Strömungspfad zwischen den Lamellen ergibt.

Bei einer horizontal durch die Lamellen geführten Strömung werden dadurch strömungsarme Gebiete dort erzielt, wo der Abstand zweier benachbarter Lamellenflächen besonders groß ist. Bereiche mit höherer Strömungsgeschwindigkeit werden dort erzielt, wo zwei benachbarte Lamellenflächen einen besonders geringen Abstand zueinander aufweisen. Auf diese Weise werden in den strömungsarmen Gebieten Zonen geschaffen, in denen auch kleine und leichte Teilchen besonders leicht flotiert werden können, die sonst mit der Strömung mitgeführt würden. Oberhalb der Lamellen können dann die üblichen Abzugseinrichtungen für die flotierten Partikel vorgesehen sein.

Die erfindungsgemäße Flotationsanlage eignet sich zum Abscheiden von freiem Öl und Fett aus dem Wasser sowie zum Abscheiden von allen anderen Schwebstoffen im Wasser.

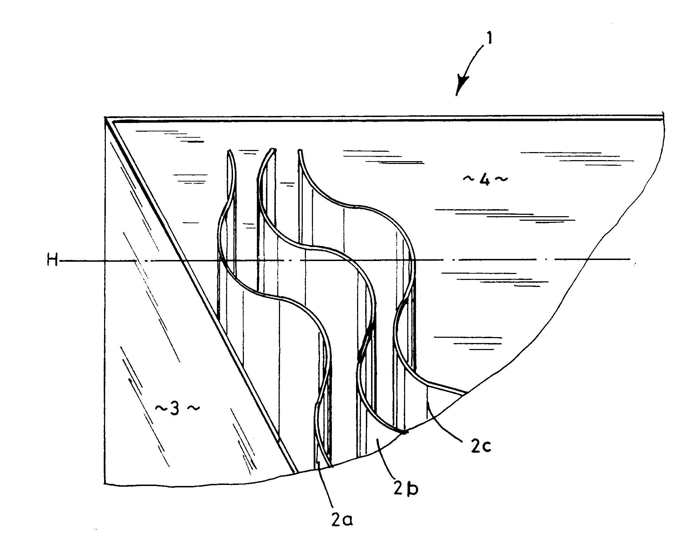

In Fig. 1 ist rein schematisch ein Ausschnitt einer erfindungsgemäßen Flotationsanlage dargestellt, die einen Ausschnitt aus einem erfindungsgemäß angeordneten Lamellenpaket zeigt.

Dabei ist mit 1 ein Behälter bezeichnet, in dem Verschmutzungen aus Wässern flotiert werden können. Der Behälter ist rein schematisch und nur in einem Bereich einer Ecke des Behälters angeordnet. In dem Behälter 1 stehen senkrecht angeordnete Lamellen 2. Die Lamellen 2 sind sinusförmig gewellt und weisen jeweils senkrecht verlaufende Rinnen auf.

Eine Hilfslinie H ist gestrichelt eingezeichnet und verläuft durch das Tiefste eines Wellentals - also eine Rinne - der Lamelle 2a, die der Behälterwand 3 am nächsten benachbart ist.

Anhand der parallel zur Behälterwand 4 verlaufenden Hilfslinie H wird deutlich, daß die weiteren Lamellen 2, nämlich die Lamellen 2b und 2c, sowohl gegenüber der Lamelle 2a als auch untereinander versetzt angeordnet sind. Hierdurch ergibt sich ein horizontaler Durchflußpfad für die Flüssigkeit zwischen den Lamellen 2, der eine ständig sich verändernde Breite aufweist. Auf diese Weise werden ständig unterschiedliche Strömungsgeschwindigkeiten zwischen den Lamellen erzielt und strömungsberuhigte Zonen geschaffen, in denen Verunreinigungen, die flotiert werden sollen, besonders leicht aufsteigen können.

Gegenüber dem dargestellten Ausführungsbeispiel mit exakt senkrecht ausgerichteten Lamellen 2 können die Lamellen auch leicht schräg angeordnet werden.

Weiterhin ist in Abwandlung vom dargestellten Ausführungsbeispiel eine Ausbildung der Lamellen mit in etwa wellenförmigem Verlauf denkbar, der nicht einer Sinusschwingung entspricht. So können die verschiedensten Wellenformen Verwendung finden und auch eckig verlaufende wellenartige Verformungen der Lamellen sind möglich.

## Patentansprüche

1. Flotationsanlage mit einer Vielzahl von parallel zueinander angeordneten Lamellen, wobei die Lamellen im wesentlichen senkrecht verlaufende Rinnen aufweisen, gekennzeichnet durch im wesenlichen senkrecht angeordnete Lamellen (2), die zueinander versetzt angeordnet sind mit nicht hintereinander fluchtenden Rinnen.

## Claims

1. A flotation installation with a plurality of lamellae arranged parallel to each other, the lamellae having substantially perpendicularly running channels, characterized by substantially perpendicularly arranged lamellae (2), which are arranged in staggered relation to each other with channels which are not in alignment behind each other.

## Revendications

1. Installation de flottation avec une pluralité de lamelles disposées parallèlement les unes aux autres, dans laquelle les lamelles présentent des rainures sensiblement verticales, caractérisée en ce qu'elle comporte des lamelles (2) disposées sensiblement à la verticale, qui sont décalées entre elles avec des rainures non alignées à la suite les unes des autres.
